# FASCICULE DE BREVET EUROPEEN

(11) **EP 1 991 752 B1**
(45) Date de publication et mention de la délivrance du brevet: **31.10.2012**
(21) Numéro de dépôt: 07731657.8
(22) Date de dépôt: 23.02.2007
(51) Int. Cl.: E06B 3/66

(54) **ENSEMBLE CONSTITUE D'UN VITRAGE MULTIPLE ET D'UN PROFILE, ET PROFILE DESTINE A UN VITRAGE**
ANORDNUNG AUS EINER MEHRFACHVERGLASUNGSEINHEIT UND EINEM PROFIL SOWIE PROFIL FÜR EINE VERGLASUNGSEINHEIT
ASSEMBLY CONSISTING OF A MULTIPLE GLAZING UNIT AND OF A PROFILE, AND PROFILE INTENDED FOR A GLAZING UNIT

(30) Priorité: 03.03.2006 FR 0650752
(43) Date de publication de la demande: 19.11.2008
(73) Titulaire: Saint-Gobain Glass France S.A., 92400 Courbevoie (FR)
(72) Inventeur: DEMARS, Yves, F-60600 Clermont (FR); POIX, René, F-60400 Noyon (FR); DOUCHE, Jean-Pierre, F-60150 Le Plessis Brion (FR)
(74) Mandataire: Lucas, Francois
(86) Numéro de dépôt international: PCT/FR2007/050838
(87) Numéro de publication internationale: WO 2007/099252

(56) Documents cités:
- WO-A-01/79644
- WO-A-03/040507
- CA-C- 1 290 624
- DE-A1- 3 036 953
- DE-B- 1 120 107
- US-A- 2 539 079
- US-A- 4 984 402

## Description

L'invention se rapporte à un vitrage multiple, en particulier isolant, auquel est associé au moins un élément profilé qui permet le montage du vitrage dans, ou en association avec un dispositif d'accueil, ainsi qu'à un profilé en tant que tel destiné à être associé à un vitrage. L'invention se rapporte de manière générale à tout domaine pour lequel un vitrage multiple est utilisé.

Un vitrage est utilisé en tant que système d'obturation vitré à destination d'ouverture ou non, pour constituer par exemple des vantaux mobiles ou fixes de fenêtre, des panneaux de portes. Aussi, le dispositif d'accueil du vitrage peut constituer divers systèmes, tels que châssis de fenêtre, chambranle de porte. Et les applications sont nombreuses, dans les domaines du bâtiment, des transports, des aménagements intérieurs des meubles frigorifiques...

Un vitrage multiple usuel comporte deux feuilles de verre qui sont espacées par une lame de gaz tel que de l'air et qui sont écartées et réunies au moyen d'un cadre entretoise ou intercalaire. Lors de la fabrication, le cadre entretoise est collé aux feuilles de verre par un cordon élastomère du type caoutchouc butyl pour un maintien mécanique provisoire des feuilles de verre, puis un mastic d'étanchéité réticulable du type polysulfure ou polyuréthane est injecté dans la gorge périphérique délimitée par les deux feuilles de verre et le cadre, afin de terminer l'assemblage mécanique des feuilles de verre. Le caoutchouc butyl a principalement comme rôle de rendre étanche l'intérieur du vitrage à la vapeur d'eau, tandis que le mastic assure une étanchéité à l'eau liquide ou aux solvants.

Le vitrage multiple est dit isolant car, en combinaison avec la lame de gaz, un déshydratant lui est associé. Le déshydratant est généralement constitué d'un tamis moléculaire introduit dans le cadre entretoise du vitrage. Il a pour rôle d'absorber les molécules d'eau emprisonnées dans la lame d'air intercalaire au moment de la fabrication du vitrage et qui seraient susceptibles de se condenser par temps froid, entraînant l'apparition de buée. Il permet également d'absorber les molécules d'eau qui sont par ailleurs susceptibles de s'introduire dans le vitrage au cours de sa vie, l'étanchéité à la vapeur d'eau au niveau du cordon d'étanchéité et de fixation de l'intercalaire n'étant pas parfaite.

Dans son utilisation, par exemple en tant que fenêtre, le vitrage est nécessairement intégré dans un châssis, le châssis conférant de la rigidité au vitrage ainsi qu'une protection du bord irrégulier du vitrage car brut de coupe. Le châssis sert ainsi de cadre porteur au vitrage, les efforts de poids et d'utilisation étant transmis par l'intermédiaire de pièces d'interface que sont les cales qui présentent une dureté appropriée. L'ensemble, châssis/vitrage, forme l'ouvrant de la fenêtre qui coopère avec le dormant intégré dans une paroi de bâtiment.

Le châssis est formé d'un cadre profilé fait de matériaux divers : bois, métal tel que de l'aluminium, ou matières plastiques. Un cadre en bois par exemple est formé de deux parties, une feuillure présentant une section en forme de L à l'intérieur de laquelle le vitrage est installé, et une partie sous forme de baguette, nommée également parclose, qui se fixe à l'opposé du coin en L et sur l'autre feuille de verre.

Afin que le vitrage soit correctement maintenu dans la feuillure et que son poids soit réparti sur des points précis du châssis, la feuillure est dotée de cales disposées ponctuellement et sur toute l'épaisseur du vitrage, c'est-à-dire depuis une feuille d'extrémité du vitrage jusqu'à l'autre feuille d'extrémité.

L'opération d'intégration d'un vitrage dans son cadre porteur nécessite du temps dans la ligne de fabrication et cela pour chaque fenêtre, le calage ne pouvant être fait que manuellement.

Par ailleurs, avec les vitrages existants, les cadres de fenêtres sont bien entendu configurés pour cacher l'épaisseur de l'intercalaire et des barrières d'étanchéité du vitrage afin de ne voir que la partie transparente du vitrage au travers de la fenêtre.

La largeur donnée au cadre du châssis incluant la hauteur totale de la feuillure correspond, outre à l'épaisseur de l'intercalaire, à la nécessité mécanique pour que le vitrage dans son châssis résiste aux sollicitations diverses comme celles du vent, ou aux chocs liés à l'ouverture et la fermeture de l'ouvrant d'une fenêtre. Ainsi, la largeur totale d'un cadre peut présenter des dimensions du double ou du triple de la hauteur de la feuillure.

Pour optimiser le clair de vue d'un vitrage, il a été conçu des vitrages pour lesquels l'intercalaire n'est pas situé entre les feuilles de verre mais fixé contre les tranches de verre tel que décrit dans la demande de brevet internationale WO 01/79644 permettant vis-à-vis des vitrages existants, de gagner une dimension équivalente à l'épaisseur de l'intercalaire et des barrières d'étanchéité.

Ce nouveau type de vitrage présente un grand intérêt du fait de l'optimisation maximale de son clair de vue puisque fournissant en transparence l'entière surface des feuilles de verre. Pourtant, s'il devait être intégré à des fenêtres d'aujourd'hui, il le serait à l'aide d'un châssis déjà existant destiné à un vitrage usuel de l'art antérieur, avec un cadre dont la largeur ne permettrait finalement pas de mettre en valeur le clair de vue augmenté dudit vitrage.

On connaît par ailleurs la réalisation de la simplification d'un cadre de fenêtre qui peut ne se limiter qu'à un seul profilé. Cette réalisation est obtenue par la constitution même du vitrage qui est formé d'un vitrage sous vide. Le brevet EP 0 870 450-B1 décrit une telle configuration. En effet, la structure d'un vitrage sous vide lui confère une rigidité et une tenue équivalentes à celles d'un vitrage monolithique de sorte qu'il n'est plus nécessaire d'associer à ce type de vitrage un cadre support. Ainsi, selon l'application, par exemple une porte, un seul profilé peut être suffisant et associé à un seul côté du vitrage, le profilé intégrant un système de charnière.

Néanmoins, un vitrage sous vide nécessite des moyens de fabrication qui sont lourds à mettre en oeuvre. De plus, en rapport avec le niveau énergétique requis à ce jour, un double vitrage reste plus économique quant à son prix qu'un vitrage sous vide.

L'invention a donc pour but de fournir un ensemble constitué d'un vitrage multiple et d'au moins un élément profilé, en particulier lorsque cet ensemble est constitué d'un vitrage et d'un cadre périphérique, qui ne présente pas les inconvénients de l'art antérieur en vue notamment de :
- réduire les opérations d'assemblage du cadre avec le vitrage;
- simplifier les opérations d'assemblage, telles que supprimer la présence de cales pour parvenir à un montage davantage automatisé;
- simplifier les opérations de réglage de l'ouvrant de fenêtre vis-à-vis du dormant ;
- simplifier la fabrication du cadre ;
- réduire les matières premières pour la constitution du cadre ;
- proposer diverses combinaisons d'assemblage du vitrage avec son cadre ou son élément profilé selon la destination du vitrage et selon la constitution du vitrage en rapport notamment au positionnement de l'intercalaire;
tout en ne créant pas de contraintes supplémentaires sur le vitrage, en n'altérant pas l'étanchéité de l'ensemble mais au contraire parvenir à renforcer la robustesse de l'étanchéité de l'ensemble.

Selon l'invention, l'ensemble constitué d'un vitrage multiple et d'un profilé associé à au moins un élément constitutif du vitrage et sur au moins une partie de la périphérie du vitrage, est caractérisé en ce que:
- le vitrage multiple comporte au moins deux feuilles de verre espacées par une lame de gaz et intercalées et assemblées au moyen d'un intercalaire qui est constitué au moins en partie par au moins un ruban solidarisé aux tranches des feuilles de verre et,
- le profilé, au moins sur une partie de sa longueur, est en contact avec l'intercalaire du vitrage, en regard d'au moins une partie de la tranche d'une feuille de verre.

On entend par contact, soit un contact direct, soit un contact par l'intermédiaire d'un élément de collage ou de jointoiement qui de préférence est mince, inférieur au millimètre par exemple. Ce contact si étroit entre l'intercalaire et le profilé est tel qu'aucun degré de liberté n'existe entre les deux surfaces rendant impossible tout mouvement de l'une des surfaces par rapport à l'autre. Cette contrainte ainsi exercée par le profilé contre l'intercalaire, à la manière d'un frettage, peut donc être obtenue par collage du profilé contre l'intercalaire et/ou par coincement mécanique.

Ce vitrage comporte un intercalaire qui, au lieu d'être assemblé aux feuilles de verre à l'intérieur du vitrage, est solidarisé aux feuilles de verre par leur tranches, à l'extérieur du vitrage, lui donnant une constitution monobloc. Ce vitrage est équivalent à un vitrage monolithique puisque l'intercalaire extérieur aux feuilles de verre et solidaire des tranches assure une liaison indéformable entre les deux feuilles de verre ; le risque de cisaillement entre les deux feuilles de verre est impossible, et de ce fait, le calage simultané des feuilles de verre dans un châssis de fenêtre, tel que pour un vitrage multiple usuel, n'est plus nécessaire.

De plus, un tel intercalaire assure au vitrage une étanchéité améliorée qui peut même être rendue parfaite suivant le type de profilé et le type d'assemblage proposés, tels que nous le verrons par la suite.

Le vitrage multiple devenu ainsi un dispositif unitaire, autoporteur et structurant, permet de lui associer un profilé qui n'a pour rôle que de monter le vitrage dans un logement d'accueil adapté à l'utilisation qui est faite dudit vitrage, et non pas contrairement à l'art antérieur, de constituer absolument un système porteur du vitrage.

C'est à présent le vitrage lui-même qui constitue le système porteur, et intégré dans un cadre d'ouvrant de fenêtre, il n'est alors plus nécessaire de fournir de cales. Au contraire, le profilé est selon l'invention fretté contre le vitrage (au moins contre l'intercalaire) sans espace intermédiaire de sorte que le vitrage transfère toute sa tenue mécanique au profilé et que la contrainte exercée est répartie selon une surface continue.

Selon une caractéristique, le profilé est en contact avec l'intercalaire sur une largeur correspondante au moins à l'épaisseur de la tranche d'une feuille de verre.

Le profilé est néanmoins associé à au moins deux parties opposées du vitrage, de façon que des forces de serrage s'exercent sur le vitrage selon des directions opposées, supprimant tout risque d'effort d'arrachement normal à l'intercalaire trop important, ce qui engendrerait sinon la destruction d'étanchéité du vitrage.

Les forces de serrage sont obtenues par une précontrainte du profilé sur le vitrage due à la construction même du cadre ou bien par une force de contrainte due à l'utilisation qui est faite du vitrage (contrainte de poids en position verticale du vitrage, contrainte due aux variations dimensionnelles du profilé).

Ainsi, cet ensemble selon l'invention intègre un vitrage multiple qui, n'étant pourtant pas sous vide, constitue un vitrage tout aussi performant quant à sa rigidité et présente l'avantage d'un confort visuel amélioré car proposant un clair de vue optimum.

Le profilé utilisé pour l'invention permet de pleinement valoriser le vitrage à clair de vue optimum et assure par ailleurs une réduction de la matière de fabrication et donc une diminution des coûts.

Le contact du profilé avec l'intercalaire, et éventuellement avec le verre du vitrage, est obtenu par collage et/ou par coincement mécanique.

Selon une caractéristique lorsque le profilé n'entoure pas toute la périphérie du vitrage, il est constitué de deux éléments qui coopèrent avec respectivement au moins deux parties du vitrage de manière à exercer deux contraintes respectives de directions opposées. L'un des éléments du profilé coopère avec le vitrage en étant en contact avec l'intercalaire du type ruban, tandis que sur l'autre élément coopère, soit en contact avec l'intercalaire comme pour le premier élément; soit sans contact en étant alors associé avec au moins l'une des feuilles de verre.

La coopération du profilé avec le vitrage sur au moins deux parties opposées dudit vitrage engendre ainsi deux contraintes de maintien de directions opposées. Avantageusement, le contact du profilé sur la plus grande partie possible de la longueur d'un côté du vitrage permet de répartir les efforts sur une surface continue, et non selon un contact ponctuel tel que dans l'art antérieur avec les cales. Ce contact en continu donne notamment les avantages suivants: réduire globalement les contraintes locales pour un effort donné qui est effectué sur le vitrage, en particulier l'intercalaire ; moins solliciter la colle lorsque celle-ci assure la fixation de l'intercalaire sur le vitrage ; renforcer la solidité du profilé et donc de l'ensemble, car le vitrage transfère sa rigidité au profilé.

Selon une caractéristique, le profilé coopère avec le vitrage au niveau d'au moins deux angles opposés lorsque le vitrage est polygonal.

Selon une autre caractéristique, le profilé coopère avec le vitrage selon au moins deux arcs de cercle diamétralement opposés lorsque le vitrage présente des formes arrondies.

Selon une autre caractéristique, lorsque le vitrage présente un premier côté longiligne et un second côté comportant une forme en demi-cercle qui est opposé au premier côté, le profilé coopère avec le vitrage selon au moins une partie du premier côté, et selon au moins un arc de cercle du second côté.

Selon une autre caractéristique, le profilé est maintenu pressé et bloqué contre la face externe d'au moins une feuille de verre.

On entend par profilé, tous types de profilés préfabriqués ou réalisés directement sur le vitrage, ayant une forme adaptée à la fonction souhaitée dudit profilé et réalisé en une matière telle que le bois, le métal, par exemple l'aluminium, ou une matière plastique, ou réalisé en plusieurs matériaux tels qu'une combinaison de deux matériaux.

Du fait que le profilé est associé à l'intercalaire du vitrage en regard seulement d'au moins une tranche de feuille de verre, le profilé n'a pas besoin de former un élément unitaire selon toute l'épaisseur du vitrage, contrairement à l'art antérieur où le profilé était monobloc car devant supporter le calage des tranches des deux feuilles de verre. Aussi, le profilé peut être constitué de deux parties faites de deux matériaux distincts selon l'habillage du profilé que l'on veut donner à l'extérieur de la fenêtre (par exemple en PVC) et à l'intérieur (par exemple en bois).

Selon la forme souhaitée et la matière utilisée du profilé ainsi que la destination de l'ensemble, le profilé peut être constitué d'un unique élément ou d'une pluralité d'éléments ; il peut être associé qu'à une seule partie du vitrage comme dit précédemment ou formé d'un cadre associé à toute la périphérie du vitrage.

Les éléments peuvent alors être assemblés entre eux par coopération mutuelle, par exemple à la manière d'un tenon et d'une mortaise, ou par tous moyens de fixation, du type vissage, collage ou soudage, ou une combinaison de ces moyens d'assemblage. Lorsque deux éléments sont distants l'un de l'autre, ils peuvent être reliés entre eux par des moyens liaison mécanique.

Lorsque le profilé forme un cadre s'étendant sur toute la périphérie du vitrage, il est constitué d'au moins deux éléments qui sont maintenus en place sur le vitrage, au moins par pression mécanique, du fait de l'assemblage des deux éléments entre eux.

Le vitrage permet très avantageusement de constituer un gabarit pour le cadre du profilé, simplifiant ainsi la fabrication de l'ensemble. Le montage est plus rapide puisque le profilé est directement associé au vitrage. Il n'y a plus besoin de butées qui servent habituellement à monter les éléments profilés pour former un cadre, avec ensuite la nécessité d'ajuster le vitrage dans ce cadre.

Selon une variante de réalisation, le profilé comporte une feuillure qui est munie d'un fond d'appui sur une partie au moins de laquelle l'intercalaire repose, et d'au moins une première paroi latérale qui est en contact avec la face externe d'une feuille de verre. La section des profilés peut bien entendu présenter diverses formes dont certaines sont données à titre d'exemple dans la description qui suit mais qui ne sont nullement limitatives.

Avantageusement, le profilé comporte une seconde paroi latérale qui est opposée et en regard de la première paroi latérale et est formée par la feuillure, ou une parclose rapportée contre la feuillure, le profilé à cheval sur le chant du vitrage présentant les deux parois latérales en contact avec la face externe, respectivement, des deux feuilles de verre.

De manière à permettre l'évacuation de l'eau lorsque le profilé constitue le bord inférieur du châssis d'une fenêtre extérieure, au moins une partie du fond d'appui du profilé comporte une rainure de drainage, éventuellement reliée à un canal d'évacuation traversant l'épaisseur du profilé. Cette configuration n'est cependant envisagée que lorsque l'étanchéité entre le châssis et le vitrage n'est pas parfaite.

On entend par étanchéité parfaite au sens de l'invention, une étanchéité sans faille obtenue uniquement par l'assemblage du vitrage et du châssis.

En effet, l'étanchéité est fonction du couple vitrage/châssis, cette étanchéité pouvant être partielle ou parfaite. L'étanchéité partielle met en oeuvre des joints d'étanchéité à l'eau disposés sur le châssis ainsi que des processus de drainage dans le châssis pour évacuer l'eau résultant du dépôt de vapeur d'eau, tandis que l'étanchéité parfaite est mise en oeuvre par le type d'assemblage du vitrage (par exemple un collage à des endroits spécifiques) et éventuellement par un système de remplissage étanche (par exemple du silicone) dans toutes interstices pouvant exister dans la liaison vitrage/châssis, rendant impossible la migration d'eau ou toute diffusion de vapeur d'eau.

La hauteur h de la feuillure du profilé destinée à s'appliquer sur la face d'une feuille de verre correspond avantageusement à au moins l'épaisseur de l'intercalaire et est d'au plus 12 mm, de préférence n'excède pas 6 mm.

Les profilés fabriqués pour les ensembles de l'invention nécessitent ainsi moins de matière première (gain de coût) puisque la hauteur de feuillure est considérablement réduite par rapport la hauteur actuelle : on veille à ne cacher que la hauteur de l'intercalaire et à être éventuellement solidaire du verre que de quelques millimètres, et éventuellement à cacher la hauteur de l'élément déshydratant lorsque celui-ci est disposé à l'intérieur du vitrage multiple isolant. Ainsi, on peut atteindre une réduction de prise en feuillure par rapport à l'art antérieur de l'ordre de 10 mm. La largeur totale du profilé peut par conséquent n'atteindre qu'une quarantaine de millimètres, ce qui améliore le clair de vue de l'ensemble tout en assurant une meilleure rigidité à l'ensemble.

Enfin, l'intercalaire du vitrage constitué d'un ou plusieurs rubans peut ne pas être agencé sur l'ensemble de la périphérie du vitrage, il l'est néanmoins selon un périmètre tel que le vitrage assure sa fonction de cadre porteur, tandis que l'autre partie du périmètre intègre par exemple un intercalaire usuel agencé entre les feuilles de verre.

L'ensemble de l'invention peut donc constituer l'ouvrant d'une porte ou d'une fenêtre, ou former un élément vitré fixe.

Le vitrage et/ou le profilé sont munis d'éléments de fixation de l'ensemble dans un logement d'accueil auquel ledit ensemble est destiné, et ils peuvent être munis d'accessoires à fonctionnalités diverses.

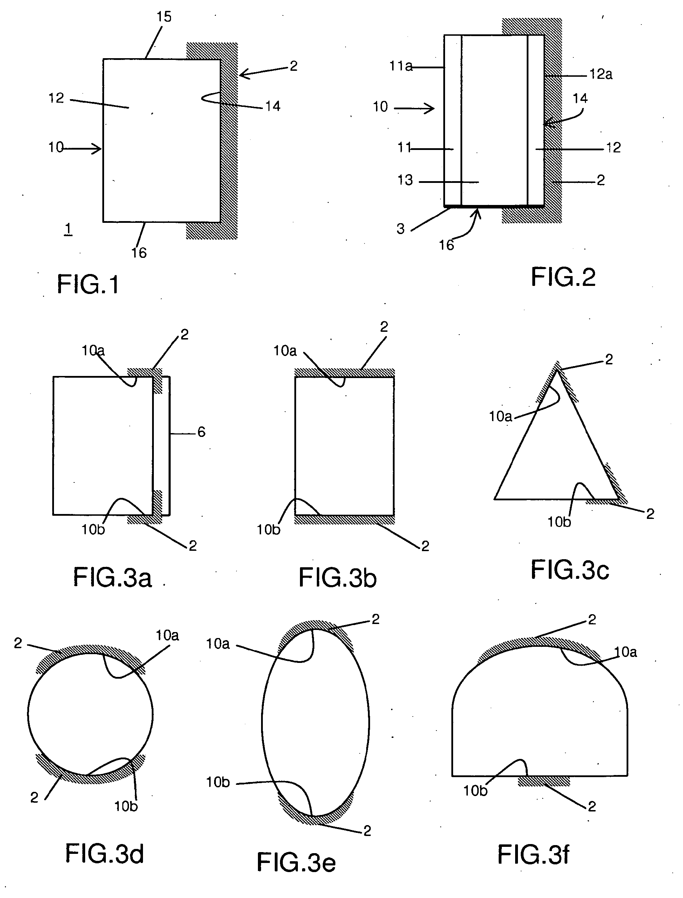

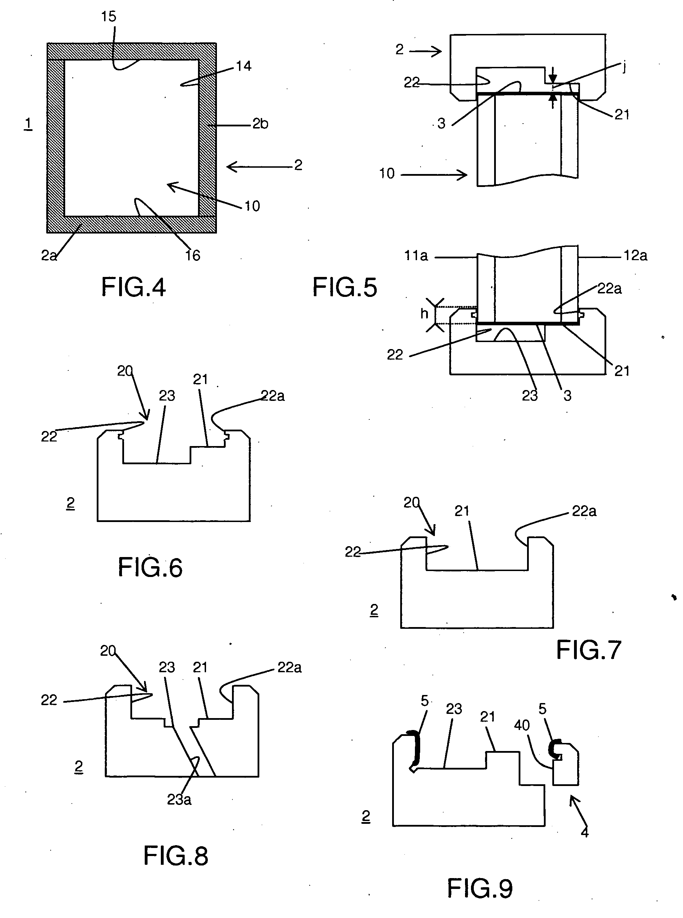

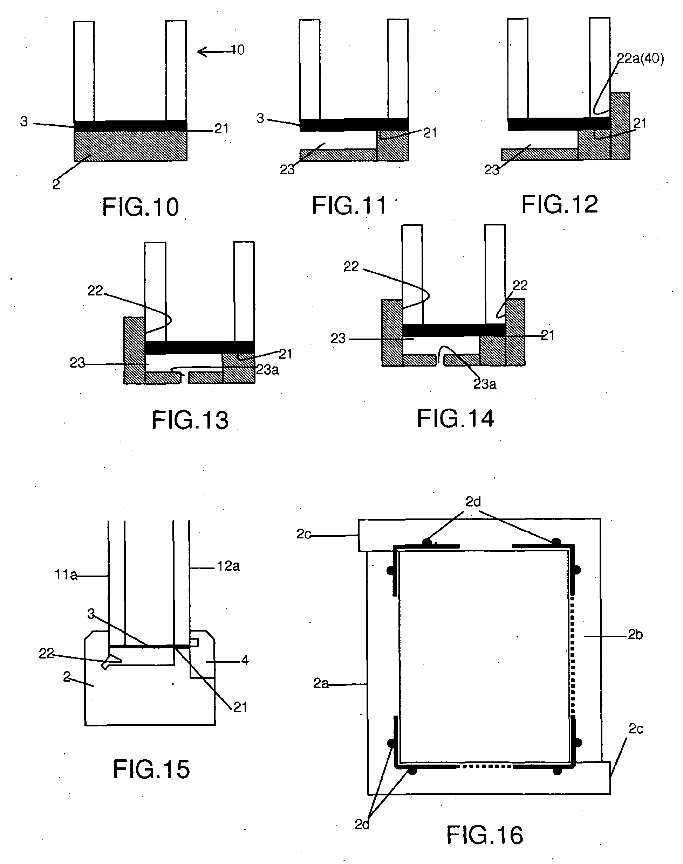

D'autres caractéristiques et avantages de l'invention vont à présent être décrits en regard des dessins sur lesquels :
● La figure 1 est une vue en élévation d'un premier mode de réalisation de l'ensemble de l'invention destiné à être utilisé en tant que porte;
● La figure 2 est une vue partielle en coupe de la figure 1 ;
● Les figures 3a à 3f sont des vues schématiques en coupe de variantes d'assemblage d'un profilé au vitrage;
● La figure 4 est une vue en élévation d'un second mode de réalisation de l'ensemble de l'invention destiné à être utilisé en tant qu'ouvrant de fenêtre;
● La figure 5 est une vue en coupe de la figure 4 ;
● La figure 6 illustre le profilé utilisé dans le mode de réalisation de la figure 5;
● Les figures 7 à 9 illustrent des vues en coupe d'autres variantes de profilé;
● Les figures 10 à 14 sont des vues schématiques en coupe d'autres variantes d'un profilé associé au vitrage;
● La figure 15 est une vue en coupe partielle de l'ensemble de l'invention selon la variante de profilé de la figure 9 ;
● La figure 16 est une vue détaillée de la figure 4 lors de l'assemblage du profilé et du vitrage;

Les figures ne sont pas à l'échelle pour en faciliter la lecture.

La figure 1 illustre un premier mode de réalisation d'un ensemble 1 constitué d'un vitrage multiple 10 et d'un profilé 2 qui n'est associé que sur une partie seulement du vitrage. Cet ensemble forme par exemple une porte vitrée, un système de charnière non représenté étant intégré dans le profilé 2.

Le vitrage visible en coupe sur la figure 2 comporte au moins deux feuilles de verre 11 et 12 séparées par au moins une lame de gaz 13, les feuilles de verre étant écartées et assemblées à l'aide d'un intercalaire 3 qui est positionné à l'extérieur des feuilles de verre.

L'intercalaire 3 du type feuillard métallique est rendu solidaire des tranches des feuilles de verre en s'étendant sur la largeur du vitrage et de manière limitée aux arêtes extérieures des tranches des feuilles de verre les plus extérieures au vitrage lorsque le vitrage est composé notamment de plus de deux feuilles de verre, et sans recouvrement des faces extérieures desdites feuilles de verre.

Cet intercalaire est constitué d'au moins un ou plusieurs rubans aboutés qui présentent une résistance linéique au flambage d'au moins 400 N/m.

Ce type de vitrage avec intercalaire sur tranche est ainsi très résistant mécaniquement. L'inertie du vitrage est fournie par l'intercalaire du type ruban qui s'étend sur toute l'épaisseur du vitrage multiple, alors que l'inertie d'un vitrage usuel, qui est fournie également par l'intercalaire, n'est assurée réellement que selon la largeur de la lame de gaz (sans inclure donc l'épaisseur des feuilles de verre). C'est pourquoi un tel vitrage est moins flexible qu'un vitrage de l'art antérieur. Il a été mesuré que pour une épaisseur classique de 12 mm de lame de gaz, la flèche d'un vitrage de l'invention est de l'ordre de 40 % moins importante que celle d'un vitrage usuel pour l'application d'une même force normale à la surface des feuilles de verre.

L'intercalaire sous forme de ruban plat solidaire des tranches des feuilles de verre peut ne pas être associé à toute la périphérie du vitrage mais seulement sur une partie de la périphérie, la partie restante étant associée de manière étanche à un intercalaire usuel agencé entre les feuilles de verre en permettant par exemple de supporter un store à lamelles. Pour assurer la rigidité nécessaire au vitrage, il faut néanmoins que l'intercalaire sous forme de ruban soit disposé sur une partie suffisante du périmètre de manière à fournir une structure unitaire. Par exemple, pour un vitrage parallélépidépique, le ruban ceinture au moins les trois côtés du vitrage ainsi qu'au moins une partie du quatrième côté à proximité de chaque angle. Pour un vitrage rond, le ceinturage est réalisé sur plus du demi-cercle.

Le vitrage 10 mécaniquement rigide forme ainsi une structure monobloc qui ne présente pas de risque de cisaillement d'une feuille de verre par rapport à l'autre feuille de verre. Aussi, le profilé 2 n'entoure pas nécessairement l'ensemble de la périphérie du vitrage, ce n'est pas le profilé 2 qui donne de la rigidité à l'ensemble mais le vitrage lui-même. Par conséquent, pour que le vitrage transmette sa fonction de structure porteuse au profilé qui servira ensuite à loger le vitrage dans un dispositif d'accueil, il suffit que le profilé soit agencé sur une portion d'au moins deux parties symétriquement opposées du vitrage, tels que deux côtés opposés pour un vitrage parallélépipédique.

Les figures 3a à 3f illustrent des exemples de réalisation de montage de profilé sur au moins deux parties symétriquement opposées 10a et 10b du vitrage. Le profilé formé ici de deux éléments distincts est rendu solidaire par collage ou par coincement mécanique. Dans ce dernier cas, une liaison mécanique entre deux éléments, telle que la référence 6 sur la figure 3a, est nécessaire.

De plus, le profilé n'a pas besoin d'être solidaire de toute la largeur de l'intercalaire, c'est-à-dire d'une feuille à l'autre du vitrage mais d'être solidaire au moins de l'épaisseur de la tranche d'une feuille de verre en regard.

Dans le mode de réalisation des figures 1 et 2, le profilé 2 de forme générale en U est associé à l'intercalaire 3 le long d'un premier côté 14 du vitrage et au moins sur une partie des côtés adjacents et opposés 15 et 16, et en regard au moins de la tranche de la feuille de verre 12.

La figure 1 peut correspondre à la vue en coupe de la figure 2 ou de la figure 10. En regard de la figure 2, le profilé est également associé à la feuille de verre 12.

Les figures 4 et 5 illustrent un autre mode de réalisation de l'invention pour lequel le profilé 2 forme un cadre sur toute la périphérie du vitrage, l'ensemble 1 constituant par exemple un ouvrant de fenêtre.

Le profilé 2 peut présenter diverses formes selon le nombre d'éléments employés pour réaliser le cadre entourant le vitrage. Ainsi, on peut utiliser deux profilés 2a et 2b en forme de L pour constituer un cadre rectangulaire tel qu'illustré sur la figure 4, comme on peut également utiliser quatre profilés longilignes.

La section des profilés peut ou non être identique. De préférence, elle le sera pour faciliter la fabrication de l'ensemble, ce qui n'est actuellement pas forcément le cas, en particulier pour les profilés en PVC.

La section du profilé peut présenter différentes variantes de réalisation, en particulier selon la nature choisie du matériau de fabrication, selon les fonctionnalités supplémentaires à donner au profilé.

Par ailleurs, l'âme du profilé opposée à la feuillure ne sera pas décrite car bien connue de l'art antérieur, pour comporter par exemple diverses chambres à performance thermique.

De manière commune à toutes les variantes qui sont envisagées à titre d'exemples dans la description ci-après (figures 6 à 14), ou qui pourraient être imaginées, le profilé 2 comporte un fond d'appui 21 sur lequel est destiné à reposer l'intercalaire 3, au moins en regard de la tranche de l'une des feuilles de verre. L'intercalaire est rendu solidaire du fond d'appui 21 du profilé par collage et/ou par coincement mécanique selon la variante de profilé utilisé. Dans le cas d'un coincement mécanique, le profilé coopère également avec l'une des feuilles de verre au moins.

De préférence, le profilé comporte une feuillure 20 qui est munie du fond d'appui 21 et d'au moins une paroi latérale 22 perpendiculaire au fond d'appui 21, le fond d'appui pouvant être doté d'une rainure 23 de drainage (figures 6, 8, 9 et 11 à 14) reliée éventuellement à un canal d'évacuation d'eau 23a tel que visible dans la vue en coupe de la variante de la figure 8.

Le fond d'appui 21 de la feuillure est nécessairement en contact avec l'intercalaire 3 en regard d'au moins une tranche des feuilles de verre (figures 2 et 5 notamment), tandis que la paroi latérale 22 peut être ou non en contact avec la face externe de l'une des feuilles de verre.

Dans le mode de réalisation d'un cadre entourant toute la périphérie du vitrage, le contact obtenu entre le vitrage et le fond d'appui 21 de la feuillure du ou des éléments profilés formant le cadre consiste en une solidarisation, de sorte que l'ensemble du vitrage et du cadre ne forme plus qu'une unité sans possibilité de mobilité du vitrage dans le cadre, la rigidité du vitrage étant transférée au cadre. Cette solidarisation est obtenue par la coopération étroite des éléments profilés entre eux formant le cadre, par assemblage mécanique (coopération mutuelle de forme complémentaire des pièces, éléments de fixation du type vis), et/ou par collage des éléments profilés entre eux. De manière complémentaire, la solidarisation est assurée par collage de l'intercalaire 3 contre le fond d'appui 21 du profilé, et éventuellement par collage de la paroi 22 du profilé contre le verre du vitrage. Ce collage est assuré par des moyens adhésifs minces, de préférence inférieurs au millimètre, et étanches aux gaz et à la vapeur d'eau, tels que du silicone ou du polyuréthane.

Dans le mode de réalisation des figures 4 et 5, le profilé 2 est donc constitué de deux éléments profilés en L, 2a et 2b, qui chaussent le vitrage à la manière d'un cavalier en étant en contact contre les faces externes 11a et 12a des feuilles de verre du vitrage sur une hauteur h de 6mm par exemple (figure 5).

Le premier élément profilé 2a est en contact avec l'intercalaire 3 sur un côté vertical et sur le côté horizontal inférieur du vitrage. Ce contact avec le verre et l'intercalaire assure l'équerrage de l'ensemble 1, le second élément profilé 2b est en contact avec l'intercalaire 3 sur le côté vertical du vitrage mais pas sur le côté horizontal supérieur pour fournir un jeu fonctionnel j (figure 5) rattrapant les écarts dimensionnels du vitrage et/ou du profilé.

En outre, par la configuration du profilé, le fond d'appui 21 de l'élément profilé 2 ne repose que sur une partie de l'intercalaire 3, en regard d'une seule tranche de verre, ici celle de la feuille de verre 12, ce qui est suffisant pour répartir de manière homogène les efforts et contraintes que subira le vitrage dans son utilisation.

Ainsi, contrairement à l'art antérieur, il n'est pas nécessaire d'utiliser de cales, ni d'assurer que toute l'épaisseur du vitrage soit soutenue.

A noter que le ruban de l'intercalaire ceinture le vitrage, ses deux extrémités étant aboutées par recouvrement engendrant une surépaisseur. Généralement, cette fermeture du ceinturage est effectuée à proximité d'un angle du vitrage. La surépaisseur de l'intercalaire coopère soit avec le jeu établi entre le profilé et le vitrage, soit avec une cannelure agencée dans le fond d'appui 21 du profilé lorsque celui-ci est en contact avec l'intercalaire.

Les variantes de profilé illustrées sur les figures 6, 7 et 8 montrent des feuillures de section en U, comprenant le fond d'appui 21, rainuré en 23 pour les figures 6 et 8, et la paroi latérale 22 ainsi qu'une paroi opposée 22a destinée à être au contact de la face externe de la feuille de verre opposée à celle solidaire de la paroi 22.

La variante de profilé de la figure 9 illustre une feuillure à section en forme de L, à fond d'appui 21 pourvu de la rainure 23 et à une seule paroi latérale 22. Une parclose 4 est de préférence associée à la feuillure pour former une paroi latérale 40 qui est opposée à la paroi 22 de la feuillure et qui vient au contact de la face externe de la feuille de verre opposée à celle solidaire de la paroi 22 (face 12a sur la figure 15). La parclose 4 présente une forme complémentaire à la partie du profilé dans laquelle elle s'emboîte. On prévoit dans cette variante pour compléter l'étanchéité, un joint 5 pouvant être associé à la paroi latérale 22 de la feuillure ou à la parclose 4 selon le côté du profilé qui est exposé avec l'extérieur en position montée de l'ensemble.

Les figures 10 à 14 illustrent des variantes d'association d'un profilé et du vitrage (au moins avec une partie de l'intercalaire 3).

Sur la figure 10, le profilé présente un fond d'appui 21 uniforme qui est collé contre l'intercalaire sur toute la largeur de celui-ci. Aucun retour n'est prévu contre les feuilles de verre.

Sur la figure 11, une partie seulement de l'intercalaire, en regard de l'une des tranches de feuille de verre est associée au fond d'appui 21 du profilé.

La figure 12 est similaire à la figure 11 concernant l'association du profilé avec l'intercalaire au niveau de l'une des feuilles de verre. Le profilé présente en outre du côté du fond d'appui 21, une paroi latérale 22a ou une parclose 40 rapportée, qui est associée à la feuille de verre.

En revanche sur la figure 13, la paroi 22 de la feuillure du profilé ou la paroi d'une parclose est associée à la face externe du verre opposé.

Enfin, sur la figure 14, les faces externes des feuilles de verre sont associées aux parois du profilé et/ou à la paroi de parcloses.

Lorsque la solidarisation du profilé avec le vitrage est réalisée par collage, en particulier pour un cadre, elle peut être obtenue après assemblage du profilé, en injectant de la colle dans des orifices 2d prévus dans le profilé (figure 16), la colle s'étendant sur des portions de profilé au niveau d'angles du vitrage ou de tout un côté du vitrage (traits noirs et pointillés sur la figure). Bien entendu, elle peut être faite avant l'assemblage, en appliquant de la colle sur la et/ou ou les surfaces du vitrage et du profilé, et même dans la rainure de drainage 23 du profilé, la colle pouvant servir de matériau d'étanchéité à l'eau. Ce type de collage assure une étanchéité parfaite de l'ensemble au sens de l'invention, sans nécessité de joints d'étanchéité supplémentaires à associer au châssis.

On a vu que l'assemblage des éléments profilés entre eux est obtenu de manière diverse, en particulier selon le type de matériau utilisé. Il peut s'agir d'une association mécanique par coopération mutuelle de formes opposées, à la manière d'un tenon et d'une mortaise, d'un assemblage mécanique par des vis, d'un assemblage par collage, ou par soudage pour le PVC par exemple, ou d'une combinaison de divers assemblages.

Un avantage pour l'ensemble de l'invention est de pouvoir utiliser des éléments profilés de forme identique et surtout dont les extrémités sont droites et non coupées à 45°, notamment par rapport aux profilés en PVC actuels dont la coupe à 45° est nécessaire pour la reprise d'étanchéité. Cette coupe droite des profilés permet de gagner en coût de matière, et de simplifier le procédé de fabrication ; en particulier si les profilés sont légèrement trop longs, on peut quand même les assembler au vitrage car leurs extrémités 2c sont droites, et couper ensuite les extrémités trop longues (figure 16).

Selon la destination de l'ensemble, le profilé 2 peut intégrer divers accessoires à fonctionnalités distinctes, en surface comme à l'intérieur (charnières, gonds, poignées, conducteurs électriques, systèmes électroniques...). Le vitrage 10 peut également comporter divers accessoires comme décrit dans la demande de brevet WO 03/040507, y compris certains liés directement à l'utilisation qui est faite de l'ensemble 1 tels qu'une poignée de porte collée sur le verre du vitrage puisque le vitrage est porteur de l'ensemble.

## Revendications

1. Ensemble (1) constitué d'un vitrage multiple (10) et d'un profilé (2) associé à au moins un élément constitutif du vitrage et sur au moins une partie de la périphérie du vitrage, **caractérisé en ce que** le vitrage multiple comporte au moins deux feuilles de verre (11, 12) espacées par une lame de gaz (13) et intercalées et assemblées au moyen d'un intercalaire (3) qui est constitué au moins en partie par au moins un ruban solidarisé aux tranches des feuilles de verre, et le profilé (2), au moins sur une partie de sa longueur, est en contact avec l'intercalaire (3) du vitrage, en regard d'au moins une partie de la tranche d'une feuille de verre.

2. Ensemble selon la revendication 1, **caractérisé en ce que** le profilé (2), est en contact avec l'intercalaire (3) sur une largeur correspondante au moins à l'épaisseur de la tranche d'une feuille de verre.

3. Ensemble selon la revendication 1 ou 2, **caractérisé en ce que** le profilé (2) est en contact avec l'intercalaire (3), et éventuellement avec le verre du vitrage, par collage et/ou par coincement mécanique.

4. Ensemble selon l'une des revendications 1 à 3, **caractérisé en ce que** le profilé est associé à au moins deux parties opposées du vitrage de façon que des forces de serrage s'exercent sur lé vitrage selon deux directions opposées.

5. Ensemble selon la revendication 4, **caractérisé en ce que** le profilé (2) coopère avec le vitrage au niveau d'au moins deux angles opposés lorsque le vitrage est polygonal.

6. Ensemble selon la revendication 4, **caractérisé en ce que** le profilé coopère avec le vitrage selon au moins deux arcs de cercle diamétralement opposés lorsque le vitrage présente des formes arrondies.

7. Ensemble selon la revendication 4, **caractérisé en ce que** lorsque le vitrage présente un premier côté longiligne et un second côté en forme de demi-cercle opposé au premier côté, le profilé coopère avec le vitrage selon au moins une partie du premier côté, et selon au moins un arc de cercle du second côté.

8. Ensemble selon l'une quelconque des revendications précédentes, **caractérisé en ce que** le profilé (2) est maintenu pressé et bloqué contre la face externe (11 a, 12a) d'au moins une feuille de verre.

9. Ensemble selon l'une quelconque des revendications précédentes, **caractérisé en ce que** le profilé (2) est constitué d'un unique élément.

10. Ensemble selon l'une quelconque des revendications 1 à 8, **caractérisé en ce que** le profilé (2) est constitué d'une pluralité d'éléments (2a, 2b) qui sont assemblés entre eux par coopération mutuelle ou par assemblage mécanique par des vis, ou d'un assemblage par collage ou soudage ou une combinaison de ces moyens, ou qui sont reliés entre eux par des moyens de liaison mécanique.

11. Ensemble selon l'une quelconque des revendications précédentes, **caractérisé en ce que** le profilé (2) est constitué d'un ou de plusieurs matériaux, tels que le bois, le métal du type aluminium, une matière plastique.

12. Ensemble selon l'une quelconque des revendications 1 à 8, **caractérisé en ce que** le profilé (2) forme un cadre s'étendant sur toute la périphérie du vitrage et est constitué d'au moins deux éléments (2a, 2b) qui sont maintenus en place sur le vitrage, au moins par pression mécanique du fait de l'assemblage des deux éléments entre eux.

13. Ensemble selon l'une quelconque des revendications précédentes, **caractérisé en ce que** le profilé (2) comporte une feuillure (20) qui est munie d'un fond d'appui (21) sur une partie au moins de laquelle l'intercalaire (3) repose, et d'au moins une première paroi latérale (22) qui est en contact avec la face externe d'une feuille de verre.

14. Ensemble selon la revendication 13, **caractérisé en ce que** le profilé (2) comporte une seconde paroi latérale (22a, 40) qui est opposée et en regard de la première paroi latérale (22) et est formée par la feuillure, ou une parclose (4) rapportée contre la feuillure, le profilé à cheval sur l'intercalaire du vitrage présentant les deux parois latérales (22, 22a, 40) en contact avec la face externe (11 a, 12a), respectivement, des deux feuilles de verre.

15. Ensemble selon la revendication 13 ou 14, **caractérisé en ce qu'**au moins une partie du fond d'appui (21) du profilé comporte une rainure de drainage (23), éventuellement reliée à un canal d'évacuation (23a) traversant l'épaisseur du profilé.

16. Ensemble selon l'une quelconque des revendications précédentes, **caractérisé en ce que** la hauteur de la feuillure (20) du profilé s'appliquant sur la face d'une feuille de verre correspond à au moins l'épaisseur de l'intercalaire et est d'au plus 12 mm, de préférence n'excède pas 6 mm.

17. Ensemble selon l'une quelconque des revendications précédentes, **caractérisé en ce que** le vitrage constitue un gabarit pour le profilé qui se présente sous la forme d'un cadre sur toute la périphérie du vitrage.

18. Ensemble selon l'une quelconque des revendications précédentes, **caractérisé en ce que** le vitrage (10) et/ou le profilé (2) sont munis d'éléments de fixation de l'ensemble (1) dans un logement d'accueil auquel ledit ensemble est destiné.

19. Ensemble selon l'une quelconque des revendications précédentes, **caractérisé en ce que** le vitrage (10) et/ou le profilé (2) sont munis d'accessoires à fonctionnalités diverses, du type charnières, gonds, poignées, conducteurs électriques, systèmes électroniques.

20. Ouvrant de porte ou de fenêtre, **caractérisé en ce qu'**il est constitué d'un ensemble selon l'une quelconque des revendications précédentes.

21. Elément vitré fixe, **caractérisé en ce qu'**il est constitué d'un ensemble selon l'une quelconque des revendications 1 à 19.

## Claims

1. An assembly (1) consisting of a multiple glazing unit (10) and a profile (2) associated with at least one constituent element of the glazing unit and over at least part of the periphery of the glazing unit, **characterized in that** the multiple glazing unit comprises at least two glass panes (11, 12) that are separated by a gas-filled space (13) and held apart and assembled by means of a interlayer (3), which consists at least partly of at least one strip fastened to the edges of the glass panes, and the profile (2) at least over part of its length, is in contact with the interlayer (3) of the glazing unit, facing at least part of the edge of one glass pane.

2. The assembly as claimed in claim 1, **characterized in that** the profile (2) is in contact with the interlayer (3) over a width corresponding to at least the thickness of the edge of a glass pane.

3. The assembly as claimed in claim 1 or 2, **characterized in that** the profile (2) is in contact with the interlayer (3) and possibly with the glass of the glazing unit, by bonding and/or by mechanical locking.

4. The assembly as claimed in one of claims 1 to 3, **characterized in that** the profile is associated with at least two opposed parts of the glazing unit so that clamping forces are exerted on the unit in two opposed directions.

5. The assembly as claimed in claim 4, **characterized in that** the profile (2) cooperates with the glazing unit in at least two opposed corners when the unit is polygonal.

6. The assembly as claimed in claim 4, **characterized in that** the profile cooperates with the glazing unit over at least two diametrically opposed circular arcs when the unit has a rounded shape.

7. The assembly as claimed in claim 4, **characterized in that**, when the glazing unit has a long first side and a semicircular-shaped second side opposite the first side, the profile cooperates with the unit along at least part of the first side and along at least a circular arc of the second side.

8. The assembly as claimed in any one of the preceding claims, **characterized in that** the profile (2) is held pressed and locked against the external face (11a, 12a) of at least one glass pane.

9. The assembly as claimed in any one of the preceding claims, **characterized in that** the profile (2) consists of a single element.

10. The assembly as claimed in any one of claims 1 to 8, **characterized in that** the profile (2) consists of a plurality of elements (2a, 2b) that are assembled together by mutual cooperation or mechanically assembled by screws, or assembled by bonding or welding, or a combination of these means, or said elements are joined together by mechanical linking means.

11. The assembly as claimed in any one of the preceding claims, **characterized in that** the profile (2) is made of one or more materials, such as wood, metal of the aluminum type, or plastic.

12. The assembly as claimed in any one of claims 1 to 8, **characterized in that** the profile (2) forms a frame extending over the entire periphery of the glazing unit and consists of at least two elements (2a, 2b) that are held in place on the unit, at least by mechanical pressure because of the two elements being assembled together.

13. The assembly as claimed in any one of the preceding claims, **characterized in that** the profile (2) includes a groove (20) which is provided with a bearing base (21), the interlayer (3) resting on at least part of said groove, and with at least a first side wall (22) which is in contact with the external face of a glass pane.

14. The assembly as claimed in claim 13, **characterized in that** the profile (2) includes an opposed second side wall (22a, 40) facing the first side wall (22) and formed by the groove, or a bead (4) attached against the groove, the profile astride the interlayer of the glazing unit having the two side walls (22, 22a, 40) in contact with the external face (11a, 12a) of the two glass panes respectively.

15. The assembly as claimed in either of claims 13 and 14, **characterized in that** at least part of the bearing base (21) of the profile includes a draining groove (23), possibly connected to a discharge channel (23a) passing through the thickness of the profile.

16. The assembly as claimed in any one of the preceding claims, **characterized in that** the height of the profile groove (20) applied against the face of a glass pane corresponds to at least the thickness of the interlayer and is at most 12 mm, preferably not exceeding 6 mm.

17. The assembly as claimed in any one of the preceding claims, **characterized in that** the glazing unit constitutes a template for the profile, which is in the form of a frame over the entire periphery of the unit.

18. The assembly as claimed in any one of the preceding claims, **characterized in that** the glazing unit (10) and/or the profile (2) are provided with elements for fastening the assembly (1) in a receiving housing for which said assembly is intended.

19. The assembly as claimed in any one of the preceding claims, **characterized in that** the glazing unit (10) and/or the profile (2) are provided with accessories having various functionalities, of the following types: hinges, hinge pins, handles, electrical conductors, electronic systems.

20. A window or door opening, **characterized in that** it consists of an assembly as claimed in any one of the preceding claims.

21. A fixed glazed element, **characterized in that** it consists of an assembly as claimed in any one of claims 1 to 19.

## Patentansprüche

1. Anordnung (1) bestehend aus einer Mehrfachverglasung (10) und einem Profil (2), das wenigstens einem Bestandteil der Verglasung und über wenigstens einen Teil des Umfangs der Verglasung zugeordnet ist, **dadurch gekennzeichnet, dass** die Mehrfachverglasung wenigstens zwei Glasscheiben (11, 12) umfasst, die durch eine Gasfüllung (13) beabstandet sind sowie mittels eines Abstandshalters (3), der wenigstens teilweise durch wenigstens ein mit den Kanten der Glasscheiben fest verbundenes Band gebildet ist, auf Abstand gehalten und verbunden sind, und das Profil (2), wenigstens über einen Teil seiner Länge, gegenüber wenigstens einem Teil der Kante einer Glasscheibe mit dem Abstandshalter (3) der Verglasung in Kontakt ist.

2. Anordnung nach Anspruch 1, **dadurch gekennzeichnet, dass** das Profil (2) über eine Breite, die wenigstens der Dicke der Kante einer Glasscheibe entspricht, mit dem Abstandshalter (3) in Kontakt ist.

3. Anordnung nach Anspruch 1 oder 2, **dadurch gekennzeichnet, dass** das Profil (2) durch Klebung und/oder durch mechanische Klemmung mit dem Abstandshalter (3) und eventuell mit dem Glas der Verglasung in Kontakt ist.

4. Anordnung nach einem der Ansprüche 1 bis 3, **dadurch gekennzeichnet, dass** das Profil wenigstens zwei gegenüberliegenden Teilen der Verglasung zugeordnet ist, so dass Klemmkräfte in zwei entgegengesetzten Richtungen auf die Verglasung wirken.

5. Anordnung nach Anspruch 4, **dadurch gekennzeichnet, dass**, wenn die Verglasung vieleckig ist, das Profil (2) mit der Verglasung im Bereich von wenigstens zwei gegenüberliegenden Ecken zusammenwirkt.

6. Anordnung nach Anspruch 4, **dadurch gekennzeichnet, dass**, wenn die Verglasung abgerundete Formen aufweist, das Profil mit der Verglasung entlang von wenigstens zwei diametral gegenüberliegenden Kreisbögen zusammenwirkt.

7. Anordnung nach Anspruch 4, **dadurch gekennzeichnet, dass**, wenn die Verglasung eine langgestreckte erste Seite und eine der ersten Seite gegenüberliegende halbkreisförmige zweite Seite aufweist, das Profil mit der Verglasung entlang wenigstens einem Teil der ersten Seite und entlang wenigstens einem Kreisbogen der zweiten Seite zusammenwirkt.

8. Anordnung nach einem der vorstehenden Ansprüche, **dadurch gekennzeichnet, dass** das Profil (2) gegen die Außenseite (11a, 12a) wenigstens einer Glasscheibe gepresst und festgelegt gehalten ist.

9. Anordnung nach einem der vorstehenden Ansprüche, **dadurch gekennzeichnet, dass** das Profil (2) aus einem einzigen Element besteht.

10. Anordnung nach einem der Ansprüche 1 bis 8, **dadurch gekennzeichnet, dass** das Profil (2) aus einer Vielzahl von Elementen (2a, 2b) besteht, die durch gegenseitiges Zusammenwirken oder durch mechanisches Verbinden mittels Schrauben oder eine Klebe- oder Schweißverbindung oder eine Kombination aus diesen Mitteln zusammengefügt sind oder die durch mechanische Verbindungsmittel untereinander verbunden sind.

11. Anordnung nach einem der vorstehenden Ansprüche, **dadurch gekennzeichnet, dass** das Profil (2) aus einem oder mehreren Materialien, wie Holz, Metall vom Typ Aluminium, einem Kunststoff besteht.

12. Anordnung nach einem der Ansprüche 1 bis 8, **dadurch gekennzeichnet, dass** das Profil (2) einen Rahmen bildet, der sich über den gesamten Umfang der Verglasung erstreckt, und aus wenigstens zwei Elementen (2a, 2b) besteht, die aufgrund der Verbindung der beiden Elemente untereinander wenigstens durch mechanischen Druck an der Verglasung an Ort und Stelle gehalten werden.

13. Anordnung nach einem der vorstehenden Ansprüche, **dadurch gekennzeichnet, dass** das Profil (2) einen Falz (20) umfasst, der mit einem Anlageboden (21), an wenigstens einem Teil dessen der Abstandshalter (3) aufliegt, sowie mit wenigstens einer ersten Seitenwand (22), die mit der Außenseite einer Glasscheibe in Kontakt ist, versehen ist.

14. Anordnung nach Anspruch 13, **dadurch gekennzeichnet, dass** das Profil (2) eine zweite Seitenwand (22a, 40), die entgegengesetzt ist und der ersten Seitenwand (22) gegenüberliegt und durch den Falz gebildet ist, oder eine an den Falz angesetzte Deckleiste (4) umfasst, wobei die beiden Seitenwände (22, 22a, 40) des den Abstandshalter der Verglasung übergreifenden Profils mit der Außenseite (11a bzw. 12a) der beiden Glasscheiben in Kontakt sind.

15. Anordnung nach Anspruch 13 oder 14, **dadurch gekennzeichnet, dass** wenigstens ein Teil des Anlagebodens (21) des Profils eine Drainagenut (23) umfasst, die eventuell mit einem die Dicke des Profils durchquerenden Abführkanal (23a) verbunden ist.

16. Anordnung nach einem der vorstehenden Ansprüche, **dadurch gekennzeichnet, dass** die Höhe des Falzes (20) des Profils, die an der Seite einer Glasscheibe aufliegt, wenigstens der Dicke des Abstandshalters entspricht und höchstens 12 mm beträgt, vorzugsweise 6 mm nicht überschreitet.

17. Anordnung nach einem der vorstehenden Ansprüche, **dadurch gekennzeichnet, dass** die Verglasung eine Schablone für das Profil bildet, das in Form eines Rahmens über den gesamten Umfang der Verglasung vorliegt.

18. Anordnung nach einem der vorstehenden Ansprüche, **dadurch gekennzeichnet, dass** die Verglasung (10) und/oder das Profil (2) mit Elementen zur Befestigung der Anordnung (1) in einem Aufnahmesitz, für den die Anordnung bestimmt ist, versehen sind.

19. Anordnung nach einem der vorstehenden Ansprüche, **dadurch gekennzeichnet, dass** die Verglasung (10) und/oder das Profil (2) mit Zubehörteilen mit verschiedenen Funktionalitäten, vom Typ Scharniere, Angeln, Griffe, elektrische Leiter, elektronische Systeme ausgestattet sind.

20. Tür- oder Fensterflügel, **dadurch gekennzeichnet, dass** er von einer Anordnung nach einem der vorstehenden Ansprüche gebildet ist.

21. Festes verglastes Element, **dadurch gekennzeichnet, dass** es von einer Anordnung nach einem der Ansprüche 1 bis 19 gebildet ist.
